(19) Europäisches Patentamt
European Patent Office
Office européen des brevets

(11) **EP 1 643 665 B1**

(12) **EUROPEAN PATENT SPECIFICATION**

(45) Date of publication and mention
of the grant of the patent:
**31.10.2007 Bulletin 2007/44**

(51) Int Cl.:
***H04B 10/158*** (2006.01)

(21) Application number: **04255949.2**

(22) Date of filing: **29.09.2004**

(54) **Control of delay line interferometer**

Kontrolle eines Verzögerungsleitungs-Interferometers

Control d'un interféromètre à lignes à retard

(84) Designated Contracting States:
**DE FR GB**

(43) Date of publication of application:
**05.04.2006 Bulletin 2006/14**

(73) Proprietors:
- **Lucent Technologies Inc.**
  **Murray Hill, New Jersey 07974-0636 (US)**
  Designated Contracting States:
  **FR GB**
- **Lucent Technologies Network Systems GmbH**
  **90411 Nürnberg (DE)**
  Designated Contracting States:
  **DE**

(72) Inventors:
- **Haunstein, Herbert**
  **91077 Dormitz (DE)**
- **Schlenk, Ralph**
  **91054 Erlangen (DE)**

(74) Representative: **Sarup, David Alexander et al**
**Alcatel-Lucent Telecom Limited**
**Unit 18, Core 3,**
**Workzone**
**Innova Business Park**
**Electric Avenue**
**Enfield, EN3 7XU (GB)**

(56) References cited:
**EP-A1- 1 335 510          EP-A2- 1 056 230**
**GB-A- 2 385 144**

- **HAUNSTEIN H ET AL OPTICAL SOCIETY OF AMERICA / INSTITUTE OF ELECTRICAL AND ELECTRONICS ENGINEERS: "Control of combined electrical feed-forward and decision feedback equalization by conditional error counts from fec in the presence of PMD" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages 474-476, XP010680301 ISBN: 1-55752-746-6**

## Description

## Technical Field

This invention relates to data transmission via optical signals, and especially to a method and device for automatic control of a delay line interferometer.

## Background of the Invention

The need for bandwidth and reach in optical transmission has given rise to a need to use more advanced modulation formats. While, at the present, amplitude modulation is still the predominant format, advanced modulation formats often make use of phase modulation. Among the advanced modulation formats which are likely to be implemented first, owing to their simplicity, are optical duobinary (ODB), differential phase shift keying (DPSK) and differential quadrature phase shift keying (DQPSK).

For some modulation formats (such as ODB, DPSK and DQPSK) a logical exclusive-OR (or modulo 2 addition) is necessary in the modulator or demodulator. As the implementation of such a device in the electrical domain gives rise to difficulties, it has been proposed to implement such a function in the optical domain using an optical delay line interferometer (DLI).

An optical DLI is a simple device in principle. An incoming optical signal is split into two paths. The signal in one path is delayed by a time corresponding to one bit and the signals in the two paths are coherently re-combined. Generally, the splitting and the re-combination are each performed in a respective optical 3dB coupler, in which case the DLI has two outputs, corresponding to the coherent sum and difference respectively of the optical signal and the delayed optical signal. Thus, if the optical signal and the delayed optical signal are in phase, the sum output will be comparable in magnitude with the original optical signal whereas the difference output will be approximately zero, whereas if the signals are $\pi$ radians out of phase the difference output will be comparable in magnitude with the original optical signal whereas the sum output will be approximately zero. If the DPSK signal is coded so that a phase change of $\pi$ radians corresponds to a digital '1' and a zero phase change corresponds to a digital '0' the sum output of the DLI, when the DLI is correctly aligned, is an ODB optical signal corresponding to the complement of the data. The detected outputs are applied to respective inputs of a differential amplifier to obtain the received data signal. Thus, an optical DLI can, in principle, act as a decoder for optical DPSK signals, or it can be used to produce ODB signals.

Similarly, a decoder for optical DQPSK signals can, in principle, be constructed using two DLIs, of which one has a delay of one symbol in the delayed path, as for the DPSK detector, and the other has a delay of one symbol plus a phase shift of $\pi/2$ radians.

Since interferometers rely for their operation on the constructive / destructive interference between two optical fields, a DLI is particularly sensitive to the setting of the delay. Since the delay is dependent on temperature, laser frequency variation, polarization state etc. and must be set accurately, it is necessary in a commercial system to employ an automatic control.

The normal methods of providing automatic control in receiver equipment do not readily transfer to the control of the delay in a DLI, or else they involve substantial extra expense.

E. Swanson et al., 'High Sensitivity Optically Preamplified Direct Detection DPSK Receiver with Active Delay-Line Stabilization', IEEE Photonics Technology Letters, vol. 6, pp. 263-265, Feb. 1994, addresses an automatic control for the stabilization of the optical delay line interferometer, but this solution requires the carrier to be present in the transmitted spectrum. This requires a degree of deliberate misalignment of the phase modulation, in that instead of the phase difference between consecutive bits being 0 or $\pi$, it is 0 or slightly less than $\pi$, which results in a degraded signal or additional penalty.

German patent application No. 10 349 736.6 proposes using the RF-power after the differential amplifier as feedback signal for a control loop. Although this is a highly effective method, it involves additional RF detection circuitry which adds to the overall costs.

K. Sticht *et al.,* 'Adaptation of electronic PMD equaliser based on BER estimation derived from FEC decoder', in *Proc. ECOC'01,* Paper WeP39, Amsterdam, 2001, disclose controlling a polarization mode dispersion equalizer, and also the sampling phase in an amplitude-modulation optical receiver using the bit error rate (BER) as determined by a forward error correction (FEC) decoder as a feedback signal. This is a very cost-effective method since, in practice, receivers need to incorporate FEC decoding in any case, so this does not represent significant extra cost, as it only involves slight modification or addition to existing apparatus, needed for one purpose, to adapt it to a second use. It would, in principle, be possible to apply this to the control of the delay in a DLI in an optical receiver. Although FEC control can be implemented easily, however, there is a problem, since the delay value is just one of several variables that need to be controlled, and all of them affect the BER, which is precisely why they do need to be controlled. This means that optimization of BER involves a number n of control variables, ($n > 1$). This is an especially severe problem during startup, since an *n*-dimensional space has to be covered to find the optimum bit error rate, which slows down the process.

European patent application EP 1335510 A1 discloses a delay-line interferometer used as Differential Phase Shift Keying receiver (DPSK) where the delay is automatically compensated by means of a temperature feedback circuit.

European patent application EP 1513273 A2, published on 09.03.2005 with a priority date of 28.08.2003, discloses the tuning of a delay interferometer based on the bit error rate estimate of a monitored signal.

## Summary of the Invention

A method according to the invention of controlling the delay setting of an optical delay line interferometer used to decode differentially encoded phase shift keyed signals comprises determining the rate of occurrence of errors $P_{err1}$ in the decoded signals, determining the rate of occurrence of double errors $P_{err2}$ in the decoded signals, deriving a control signal representative of the ratio $P_{err2}/P_{err1}$ of the determined rates and using said control signal to control said delay setting.

An embodiment of the present invention is a technique that makes use of FEC decoders, thereby reducing cost by reusing apparatus, and, at the same time, solves the startup time problem. Additional information available from the FEC decoder, in addition to simple error counts, is used for that purpose.

## Brief Description of the Drawing

Some embodiments of the invention will now be described by way of example with reference to the accompanying drawings, in which:

> FIG. 1 shows a known DPSK receiver employing a DLI;
> FIG. 2 shows a DPSK receiver embodying the present invention;
> FIG. 3 shows some published results for the occurrence of errors in a DPSK receiver and its dependence on the signal to noise ratio;
> FIG. 4 shows some published results for the occurrence of double errors in a DPSK receiver and its dependence on the signal to noise ratio; and
> FIGs 5-7 show the results of our calculations for the dependence of the occurrence of double errors on DLI detuning under a variety of conditions.

## Detailed Description

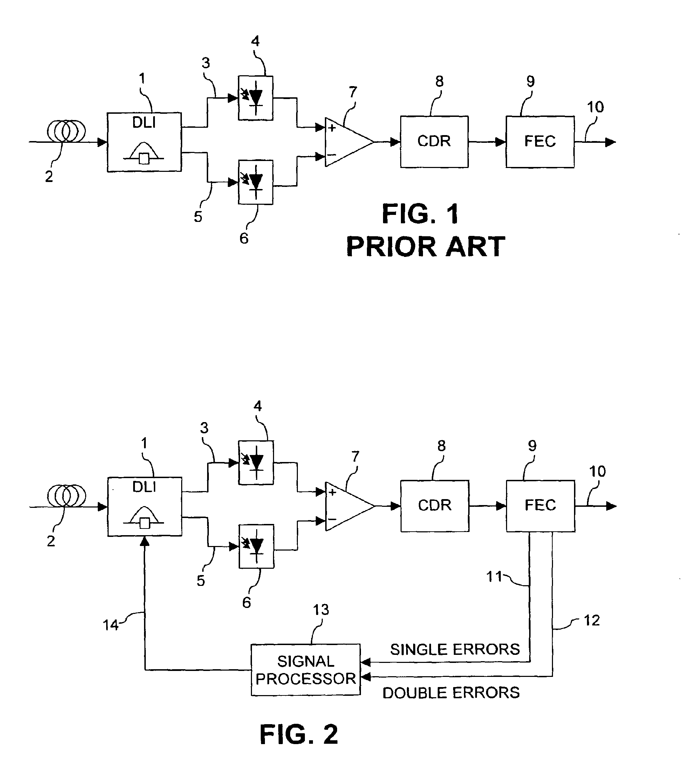

FIG. 1 shows the general layout of a receiver for optical DPSK signals. A delay-line interferometer (DLI) 1 is connected to receive optical DPSK signals from an optical fiber link 2. The DLI is constructed on the principles of a Mach-Zehnder interferometer, with one arm incorporating a delay of one bit length of the DPSK signal relative to the other arm.

The DLI has a sum output 3 which provides a signal which is the sum of the optical signal in one bit period with the optical signal in the next bit period, and is therefore of high intensity when there is no phase difference between the optical signals in the two bit periods, and of approximately zero intensity when there is a phase difference of π radians between the two signals. The signal from the sum output 3 is applied to a first photo-detector 4 which detects the signal. The DLI also has a difference output 5 which provides a signal which is the difference between the optical signal in one bit period and the optical signal in the next bit period, and is therefore of approximately zero intensity when there is no phase difference between the optical signals in the two bit periods, and of high intensity when there is a phase difference of π radians between the two signals. The signal from the difference output 5 is applied to a second photo-detector 6 which detects the signal. Thus the first and second photo-detectors 4 and 6 provide complementary electrical signals corresponding to the data encoded on the optical DPSK signals.

The electrical signals from the first and second photo-detectors 4 and 6 are supplied to respective inputs of a differential amplifier 7 which combines the two complementary electrical signals, thus providing a 3dB advantage.

The output of the differential amplifier 7 is supplied to conventional clock and data recovery (CDR) circuitry 8 to provide a recovered clean data signal corresponding to the data encoded on the DPSK optical signal.

Since the data encoded on the DPSK optical signal is conventionally encoded with an error correction code, the clean data signal recovered by the CDR circuitry 8 is applied to conventional forward error correction (FEC) decoder circuitry 9 which provides the output 10 of the receiver.

The receiver shown in FIG. 1 efficiently receives and decodes DPSK optical signals, provided that the DLI 1 is correctly configured so that the delay in one arm, relative to the other, is set at one bit period with a high precision, so that when the phase difference between the optical signals in successive bit periods is zero, the signals accurately cancel at the difference output 5 and when the phase difference is π radians, they accurately cancel at the sum output 4. Clearly, if the delay is set wrongly by an amount corresponding to a phase shift of π radians, the outputs will be totally wrong, since when the phase difference between the optical signals in successive bit periods is zero, the signals will cancel at the sum output 4, because of the phase shift of π radians introduced by the error in configuration of the DLI. That is an extreme case, but if the delay is set wrongly by a smaller amount, the detection will be less decisive and the error rate will increase.

Some way of controlling the delay in the DLI is therefore required. DLIs are known in which the delay is adjustable, for example by means of temperature control or piezo-electric deformation, but the problem is to provide a suitable control signal to detect errors in the configuration of the DLI, and particularly, to distinguish them from other sources of error in the received signal, such as dispersion and noise.

FIG. 2 shows the receiver of FIG. 1 modified according to an embodiment of the invention. The FEC circuitry 9 is modified to produce further outputs 11 and 12 corresponding to the rates of occurrence of detected errors and detected double errors respectively. Since the FEC circuitry detects errors as part of its conventional function, it is a simple matter to extract such data. The outputs 11 and 12 are supplied to a signal processor which calculates the ratio of the rate of occurrence of detected double errors to the rate of occurrence of detected errors and derives a control signal 14 for tuning the delay of the DLI as will be described below.

The rate of occurrence of detected errors is proportional to

$$P_{err1} = P(e_n)$$

where $P(e_n)$ is the probability that an error is detected in any given bit $n$. The rate of occurrence of detected double errors is proportional to

$$P_{err2} = P(e_{n+1}, e_n)$$

where $P(e_{n+1}, e_n)$ is the probability that errors will be detected in any given pair of successive bits $n$ and $n + 1$. Since

$$P(e_{n+1}, e_n) = P(e_{n+1}| e_n) \times P(e_n)$$

where $P(e_{n+1}|e_n)$ is the conditional probability that an error will be detected in a bit $n + 1$ given that an error was detected in the immediately preceding bit $n$, the ratio of $P_{err2}$ and $P_{err1}$ is equal to the conditional probability $P(e_{n+1}| e_n)$

$$P_{err2}/P_{err1} = P(e_{n+1}| e_n).$$

If the detected errors were uncorrelated, the conditional probability $P(e_{n+1}| e_n)$, and therefore the ratio $P_{err2}/P_{err1}$, would be equal to the single error probability $P(e_n)$, but it is known that in DPSK systems, and differentially encoded systems generally, errors tend to occur in pairs, as has been shown experimentally and theoretically by J. Salz and B. R. Saltzberg, in 'Double Error Rates in Differentially Coherent Phase Systems', IEEE Transactions on Communications Systems, vol. 12, pp. 202-205, June 1964.

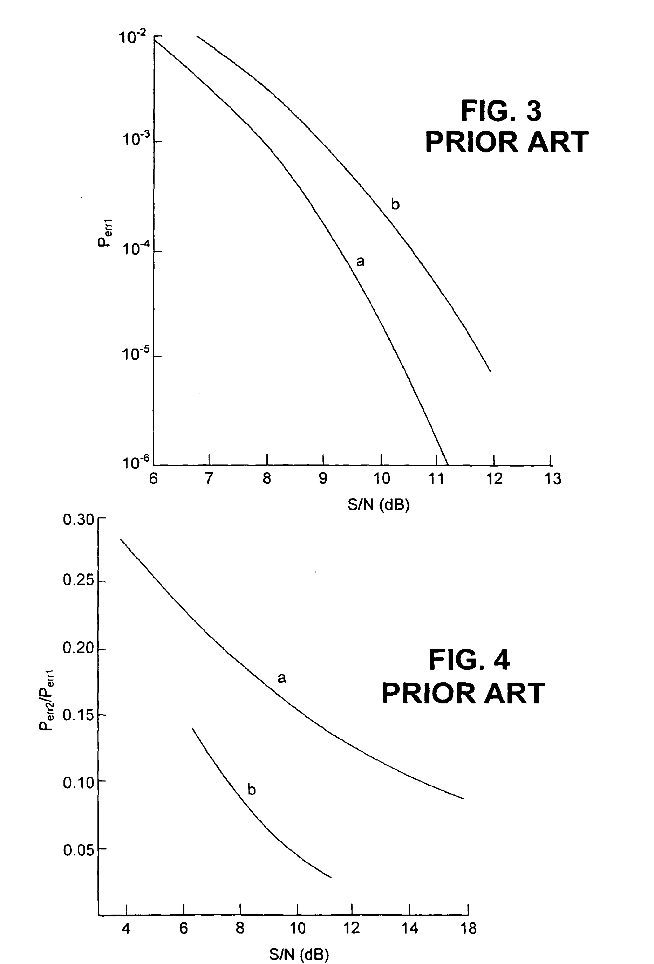

FIGs 3 and 4 show the single error rate $P_{err1}$ and the conditional error rate (i.e. the ratio $P_{err2}/P_{err1}$) respectively as dependent on signal to noise ratio in a DPSK system as determined by Salz *et al*. In both Figures, curve **a** represents the result of the theoretical treatment and curve **b** represents experimental results. It is clear that the conditional error rate is considerable greater than the single error rate and that both depend on the signal to noise ratio.

We have found that the ratio $P_{err2}/P_{err1}$ has a characteristic behavior as the delay of the DLI is varied close to the correct value, and that this behavior is maintained over a wide range of signal to noise ratio as well as residual dispersion, which is usually present in optical transmission systems.

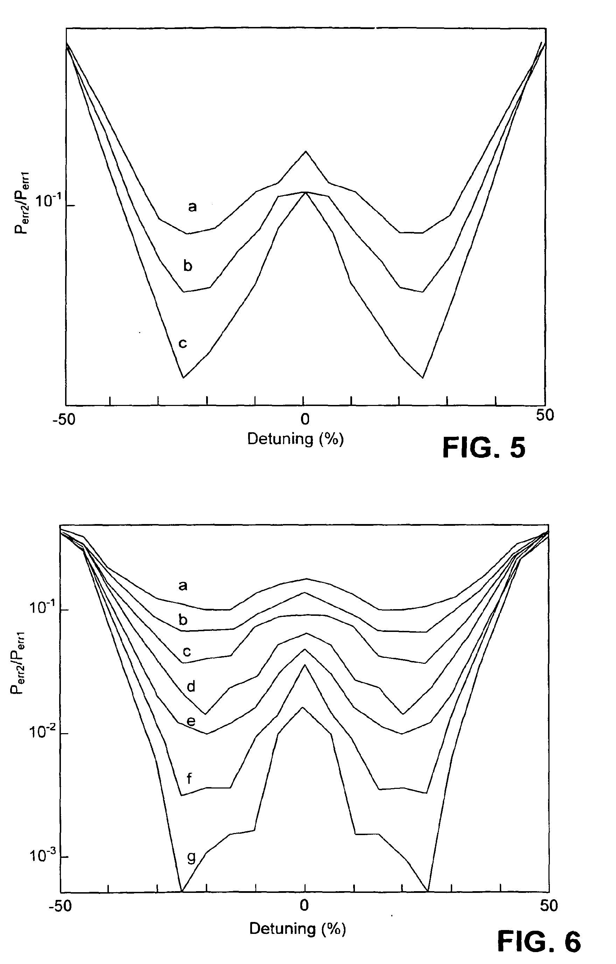

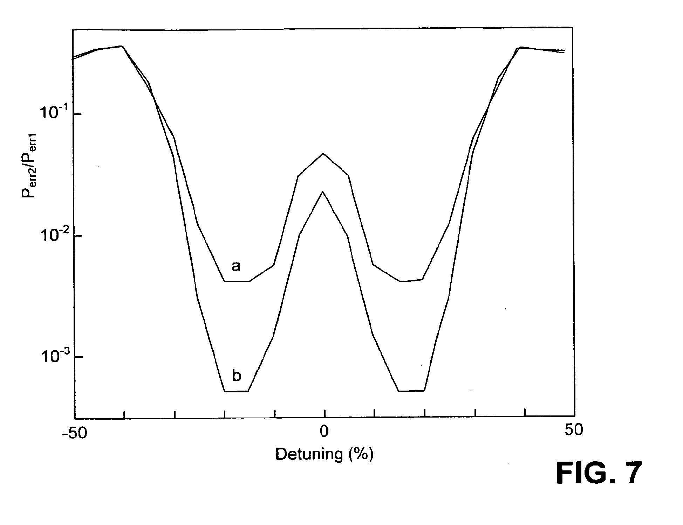

FIGs 5-7 show the results of computer Monte-Carlo simulations for the ratio $P_{err2}/P_{err1}$ as a function of the detuning of the delay of the DLI for varying amount of residual dispersion and signal to noise ratio. FIG. 5 shows the results for zero residual dispersion. Curve **a** represents a signal to noise ratio of 8dB, curve **b** a signal to noise ratio of 9dB and curve **c** a signal to noise ratio of 10dB. FIG. 6 shows the results for a residual dispersion of 50 ps/nm. Curves **a-g** represent signal to noise ratios of 8-14dB respectively, in steps of 1 dB. FIG. 7 shows the results for a residual dispersion of 100 ps/nm. Curves **a** and **b** represent signal to noise ratios of 18dB and 20dB respectively.

In all cases, the ratio $P_{err2}/P_{err1}$ shows a characteristic W-shaped structure, consisting of a local maximum at the zero detuning point, with two closely adjacent minima, one on each side of the maximum. Thus, the zero detuning point is clearly distinguished by three distinct points in the $P_{err2}/P_{err1}$ curve: two dips and one peak.

It can be seen from FIGs 5-7 that this behavior in principle does not change at different OSNR values different residual dispersion values. The latter is particularly important as a tunable dispersion compensator (TDC) is a component that is typically also controlled by bit error feedback.

This behavior is to be compared with that of the simple bit error rate (BER) $P_{err1}$, which simply has a minimum at the zero detuning point, and whose behavior also depends on the OSNR and residual dispersion. At setup, the signal processor 13, which may be implemented as a stored-program signal processor, scans the DLI delay setting whilst monitoring the ratio $P_{err2}/P_{err1}$. Thus the characteristic W-shaped structure can be easily identified, and the optimum setting of the DLI rapidly found.

The invention has been particularly described in relation to the detection of optical DPSK signals, but it can be applied to other modulation formats, such as DQPSK. In DQPSK, two DLIs are employed, one to detect phase shifts of 0 and π radians and the other to detect phase shifts of π/2 and —π/2 radians. Thus, there are two zero detuning points to find. Also, each of the four possible outputs corresponds to two bits, so the error rates that need to be monitored are the rates of occurrence of errors in two-bit symbols and of errors in successive pairs of two-bit symbols. One possibility would be to monitor all symbols and symbol pairs and to search for the zero detuning points of the DLIs jointly, by searching the two-dimensional space spanned by the delays of the two DLIs. Alternatively, since one of the DLIs detects one set of symbols (*e.g.*, '00' and '01') and the other of the DLIs detects another set of symbols (*e.g.,* '10' and '11') the symbol errors can be classified according to whether the symbol was detected by one DLI or the other. Thus separate error rates $P_{err1}$ and double error rates $P_{err2}$ can be derived for the two DLIs, and separate control signals can be derived from the respective $P_{err2}/P_{err1}$ ratios. In this case, though the derivation of the control signals is more complex, the zero detuning points can be found by simultaneously searching in two one-dimensional spaces, rather than searching in a two-dimensional space.

Also, the invention can be applied to the encoding of ODB signals since, as has been previously noted, such signals can be produced by applying DPSK signals to a DLI and taking the sum output and, in fact, ODB signals are an intermediate product of a DPSK decoder, appearing at the sum output 3 of the DLI of FIGs. 1 and 2. Of course, since in the case of ODB signals, the adjustment takes place at the encoder end (*i.e.*, prior to transmission, rather than subsequent to transmission) since the DPSK decoding is actually a part of the ODB encoding, the correct data are available, independently of any forward error correcting code, so the error rate and double error rate can be determined by comparing the correct data directly with the DPSK decoded data.

## Claims

1. A method of controlling the delay setting of an optical delay line interferometer used to decode differentially encoded phase shift keyed signals, said method comprising:

   determining the rate of occurrence of errors $P_{err1}$ in the decoded signals;

   **characterized in that** said method further comprises :

   determining the rate of occurrence of double errors $P_{err2}$ in the decoded signals;
   deriving a control signal representative of the ratio $P_{err2}/P_{err1}$ of the determined rates; and
   using said control signal to control said delay setting.

2. The method of claim 1 wherein said differentially encoded phase shift keyed signals are DPSK signals, said errors are single bit errors and said double errors are errors in two consecutive bits.

3. The method of claim 2 wherein said decoding of said DPSK signals provides optical duobinary signals for transmission.

4. The method of claim 1 wherein said differentially encoded phase shift keyed signals are DQPSK signals, said errors are errors in symbols and said double errors are errors in two consecutive symbols.

5. The method of claim 1 wherein said differentially encoded phase shift keyed signals carry data encoded with an error correcting code to enable error correction, wherein said determining the rates of occurrence of errors and of double errors includes detecting said errors in the course of said error correction.

6. The method of claim 1 wherein said using said control signal includes scanning the delay of said delay line interferometer and locating a structure in said control signal consisting of a local maximum with two adjacent minima, one each side of said maximum.

7. Apparatus for controlling the delay setting of an optical delay line interferometer (1) used to decode differentially encoded phase shift keyed signals, said apparatus comprising:

   means (9) for determining the rate of occurrence of errors $P_{err1}$ in the decoded signals;

   **characterized in that** said apparatus further comprises:

   means (9) for determining the rate of occurrence of double errors $P_{err2}$ in the decoded signals;
   means (13) for deriving a control signal (14) representative of the ratio $P_{err2}/P_{err1}$ of the determined rates; and
   means for using said control signal (14) to control said delay setting.

8. The apparatus of claim 7 wherein said differentially encoded phase shift keyed signals are DPSK signals, said errors are single bit errors and said double errors are errors in two consecutive bits.

9. The apparatus of claim 8 wherein said decoding of said DPSK signals provides optical duobinary signals for transmission.

10. The apparatus of claim 7 wherein said differentially encoded phase shift keyed signals are DQPSK signals, said errors are errors in symbols and said double errors are errors in two consecutive symbols.

11. The apparatus of claim 7 wherein said differentially encoded phase shift keyed signals carry data encoded with an error correcting code to enable error correction, wherein said determining the rates of occurrence of errors and of double errors includes detecting said errors in the course of said error correction.

12. The apparatus of claim 7 wherein said means for using said control signal comprises means for scanning the delay of said delay line interferometer (1) and locating a structure in said control signal consisting of a local maximum with two adjacent minima, one each side of said maximum.

## Patentansprüche

**1.** Verfahren zur Kontrolle der Verzögerungseinstellung eines optischen Verzögerungsleitungs-Interferometers, mit dem differentiell codierte phasenumgetastete Signale decodiert werden, mit den folgenden Schritten:

Bestimmen der Rate des Auftretens von Fehlern $P_{err1}$ in den decodierten Signalen;
**dadurch gekennzeichnet, daß** das Verfahren ferner die folgenden Schritte umfaßt:

Bestimmen der Rate des Auftretens von Doppelfehlern $P_{err2}$ in den decodierten Signalen;
Ableiten eines Kontrollsignals, das das Verhältnis $P_{err2}/P_{err1}$ der bestimmten Raten repräsentiert; und
Verwenden des Kontrollsignals zur Kontrolle der Verzögerungseinstellung.

**2.** Verfahren nach Anspruch 1, wobei die differentiell codierten phasenumgetasteten Signale DPSK-Signale sind, die Fehler Einzelbitfehler sind und die Doppelfehler Fehler in zwei aufeinanderfolgenden Bit sind.

**3.** Verfahren nach Anspruch 2, wobei die Decodierung der DPSK-Signale optische Duobinärsignale für die Übertragung bereitstellt.

**4.** Verfahren nach Anspruch 1, wobei die differentiell codierten phasenumgetasteten Signale DQPSK-Signale sind, die Fehler Fehler in Symbolen sind und die Doppelfehler Fehler in zwei aufeinanderfolgenden Symbolen sind.

**5.** Verfahren nach Anspruch 1, wobei die differentiell codierten phasenumgetasteten Signale Daten führen, die mit einem Fehlerkorrekturcode codiert sind, um Fehlerkorrektur zu ermöglichen, wobei das Bestimmen der Raten des Auftretens von Fehlern und Doppelfehlern umfaßt, die Fehler im Verlauf der Fehlerkorrektur zu detektieren.

**6.** Verfahren nach Anspruch 1, wobei das Verwenden des Kontrollsignals umfaßt, die Verzögerung des Verzögerungsleitungs-Interferometers zu scannen und eine Struktur in dem Kontrollsignal zu finden, die aus einem lokalen Maximum mit zwei benachbarten Minima, eines auf jeder Seite des Maximums, besteht.

**7.** Vorrichtung zur Kontrolle der Verzögerungseinstellung eines optischen Verzögerungsleitungs-Interferometers (1), mit dem differentiell codierte phasenumgetastete Signale decodiert werden, wobei die Vorrichtung folgendes umfaßt:

Mittel (9) zum Bestimmen der Rate des Auftretens von Fehlern $P_{err1}$ in den decodierten Signalen;
**dadurch gekennzeichnet, daß** die Vorrichtung ferner folgendes umfaßt:
Mittel (9) zum Bestimmen der Rate des Auftretens von Doppelfehlern $P_{err2}$ in den decodierten Signalen;
Mittel (13) zum Ableiten eines Kontrollsignals (14), das das Verhältnis $P_{err2}/P_{err1}$ der bestimmten Raten repräsentiert; und
Mittel zum Verwenden des Kontrollsignals (14) zur Kontrolle der Verzögerungseinstellung.

**8.** Vorrichtung nach Anspruch 7, wobei die differentiell codierten phasenumgetasteten Signale DPSK-Signale sind, die Fehler Einzelbitfehler sind und die Doppelfehler Fehler in zwei aufeinanderfolgenden Bit sind.

**9.** Vorrichtung nach Anspruch 8, wobei die Decodierung der DPSK-Signale optische Duobinärsignale für die Übertragung bereitstellt.

**10.** Vorrichtung nach Anspruch 7, wobei die differentiell codierten phasenumgetasteten Signale DQPSK-Signale sind, die Fehler Fehler in Symbolen sind und die Doppelfehler Fehler in zwei aufeinanderfolgenden Symbolen sind.

**11.** Vorrichtung nach Anspruch 7, wobei die differentiell codierten phasenumgetasteten Signale Daten führen, die mit einem Fehlerkorrekturcode codiert sind, um Fehlerkorrektur zu ermöglichen, wobei das Bestimmen der Raten des Auftretens von Fehlern und Doppelfehlern umfaßt, die Fehler im Verlauf der Fehlerkorrektur zu detektieren.

**12.** Vorrichtung nach Anspruch 7, wobei die Mittel zum Verwenden des Kontrollsignals Mittel zum Scannen der Verzögerung des Verzögerungsleitungs-Interferometers (1) und zum Finden einer Struktur in dem Kontrollsignal, die aus einem lokalen Maximum mit zwei benachbarten Minima, eines auf jeder Seite des Maximums, besteht, umfassen.

## Revendications

**1.** Procédé de commande du réglage de retard d'un interféromètre à lignes à retard optique utilisé pour décoder des signaux modulés par déplacement de phase codés différentiellement, ledit procédé comprenant :

la détermination du taux d'occurrences d'erreurs $P_{err1}$ dans les signaux décodés;
**caractérisé en ce que** ledit procédé comprend en outre :

la détermination du taux d'occurrences de doubles erreurs $P_{err2}$ dans les signaux décodés ;
la dérivée d'un signal de commande représentatif du rapport $P_{err2}/P_{err1}$ des taux déterminés ; et
l'utilisation dudit signal de commande pour commander ledit réglage de retard.

2. Procédé selon la revendication 1, dans lequel lesdits signaux modulés par déplacement de phase codés différentiellement sont des signaux DPSK, lesdites erreurs sont des erreurs de bits uniques et lesdites doubles erreurs sont des erreurs dans deux bits consécutifs.

3. Procédé selon la revendication 2, dans lequel ledit décodage desdits signaux DPSK fournit des signaux duobinaires optiques à transmettre.

4. Procédé selon la revendication 1, dans lequel lesdits signaux modulés par déplacement de phase codés différentiellement sont des signaux DQPSK, lesdites erreurs sont des erreurs dans des symboles et lesdites doubles erreurs sont des erreurs dans deux symboles consécutifs.

5. Procédé selon la revendication 1, dans lequel lesdits signaux modulés par déplacement de phase codés différentiellement portent des données codées avec un code de correction d'erreurs afin de permettre la correction des erreurs, dans lequel ladite détermination des taux d'occurrences d'erreurs et de doubles erreurs comporte la détection desdites erreurs durant ladite correction d'erreurs.

6. Procédé selon la revendication 1, dans lequel ladite utilisation dudit signal de commande comporte le balayage du retard dudit interféromètre à ligne à retard et la localisation d'une structure dans ledit signal de commande consistant en un maximum local avec deux minima adjacents, un de chaque côté dudit maximum.

7. Appareil de commande du réglage de retard d'un interféromètre à ligne à retard optique (1) utilisé pour décoder des signaux modulés par déplacement de phase codés différentiellement, l'appareil comprenant :

un moyen pour déterminer (9) le taux d'occur-

rences d'erreurs $P_{err1}$ dans les signaux décodés ;
**caractérisé en ce que** ledit appareil comprend en outre :

un moyen pour déterminer (9) le taux d'occurrences d'erreurs $P_{err2}$ dans les signaux décodés ;
un moyen (13) pour dériver un signal de commande (14) représentatif du rapport $P_{err2}/P_{err1}$ des taux déterminés ; et
un moyen pour utiliser ledit signal de commande (14) pour commander ledit réglage de retard.

8. Appareil selon la revendication 7, dans lequel lesdits signaux modulés par déplacement de phase codés différentiellement sont des signaux DPSK, lesdites erreurs sont des erreurs de bits uniques et lesdites doubles erreurs sont des erreurs dans deux bits consécutifs.

9. Appareil selon la revendication 8, dans lequel ledit décodage desdits signaux DPSK fournit des signaux duobinaires optiques à transmettre.

10. Appareil selon la revendication 7, dans lequel lesdits signaux modulés par déplacement de phase codés différentiellement sont des signaux DQPSK, lesdites erreurs sont des erreurs dans des symboles et lesdites doubles erreurs sont des erreurs dans deux symboles consécutifs.

11. Appareil selon la revendication 7, dans lequel lesdits signaux modulés par déplacement de phase codés différentiellement portent des données codées avec un code de correction d'erreurs afin de permettre une correction des erreurs, dans lequel ladite détermination des taux d'occurrences d'erreurs et de doubles erreurs comporte la détection desdites erreurs durant ladite correction d'erreurs.

12. Appareil selon la revendication 7, dans lequel le moyen pour utiliser ledit signal de commande comporte le balayage du retard dudit interféromètre à ligne à retard (1) et la localisation d'une structure dans ledit signal de commande consistant en un maximum local avec deux minima adjacents, un de chaque côté dudit maximum.

**FIG. 1**
**PRIOR ART**

SINGLE ERRORS

SIGNAL
PROCESSOR

DOUBLE ERRORS

**FIG. 2**

FIG. 3
PRIOR ART

FIG. 4
PRIOR ART

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10349736
- EP 1335510 A1
- EP 1513273 A2

**Non-patent literature cited in the description**

- **E. SWANSON et al.** High Sensitivity Optically Preamplified Direct Detection DPSK Receiver with Active Delay-Line Stabilization. *IEEE Photonics Technology Letters,* February 1994, vol. 6, 263-265

- **J. SALZ ; B. R. SALTZBERG.** Double Error Rates in Differentially Coherent Phase Systems. *IEEE Transactions on Communications Systems,* June 1964, vol. 12, 202-205